# EUROPEAN PATENT SPECIFICATION

(11) **EP 1 274 210 B1**
(45) Date of publication and mention of the grant of the patent: **14.06.2006**
(21) Application number: 02014856.5
(22) Date of filing: 04.07.2002
(51) Int. Cl.: H04L 27/26, H04L 1/06

(54) **OFDM receiver**
OFDM-Empfänger
Récepteur OFDM

(30) Priority: 05.07.2001 JP 2001204865
(43) Date of publication of application: 08.01.2003
(73) Proprietor: ALPS ELECTRIC CO., LTD., Ota-ku Tokyo (JP)
(72) Inventor: Ohtaki, Yukio, Alps Electric Co., Ltd., Tokyo (JP)
(74) Representative: Hirsch, Peter

(56) References cited:
- EP-A- 0 844 765
- EP-A- 0 863 620

## Description

### BACKGROUND OF THE INVENTION

### 1. Field of the Invention

The present invention relates to an OFDM (Orthogonal Frequency Division Multiplex) receiving apparatus for receiving an OFDM modulation signal used in terrestrial-wave digital broadcasts. More particularly, the present invention relates to an OFDM receiving apparatus, having a diversity receiving function, which is suitably installed in a vehicle. Such a diversity circuit is known from EP 0 863 620.

### 2. Description of the Related Art

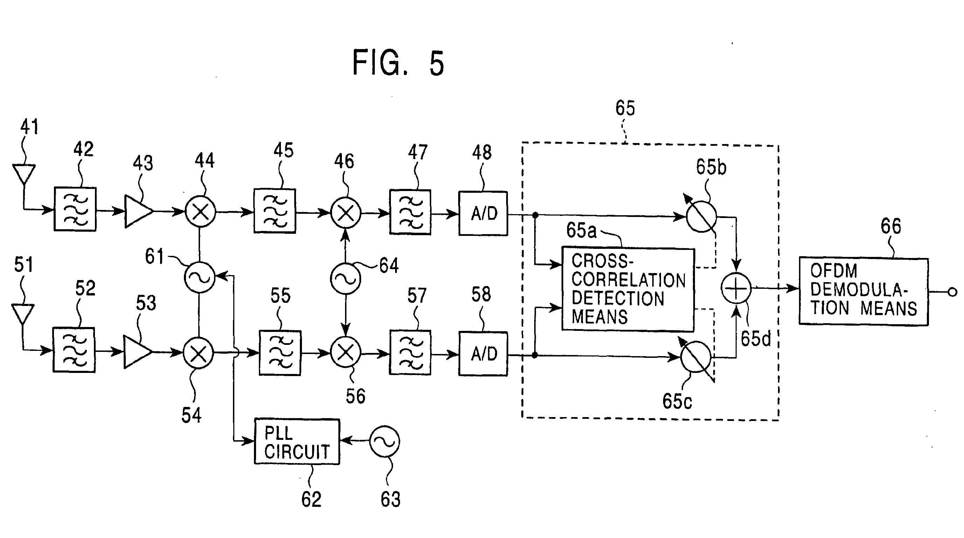

In an OFDM receiving apparatus installed in a mobile unit, since the OFDM receiving apparatus is vulnerable to an influence of a variation in the level of a received signal, associated with fading, a diversity receiving function for avoiding this situation is included. Fig. 5 shows the configuration of such a conventional OFDM receiving apparatus having a diversity receiving function. The OFDM receiving apparatus comprises a plurality of receiving systems (for the sake of convenience, two systems are assumed) including an antenna, diversity combining means for diversity-combining signals output from each receiving system, and OFDM demodulation means for OFDM-demodulating a signal output from the diversity combining means.

In Fig. 5, one of the receiving systems comprises an antenna 41, an RF band-pass filter 42, a low noise amplifier 43, a first mixer 44, a first IF band-pass filter 45, a second mixer 46, a second IF band-pass filter 47, and an A/D converter 48. The other receiving system also comprises an antenna 51, an RF band-pass filter 52, a low noise amplifier 53, a first mixer 54, a first IF band-pass filter 55, a second mixer 56, a second IF band-pass filter 57, and an A/D converter 58.

A local oscillation signal is supplied from a first local oscillator 61 to the two mixers 44 and 54. The oscillation frequency of the first local oscillator 61 is controlled by a PLL (Phase-Locked Loop) circuit 62, and a reference signal is supplied from a reference oscillator 63 to the PLL circuit. Furthermore, a local oscillation signal is supplied from a second local oscillator 64 to the two mixers 46 and 56.

In the above configuration, in one of the receiving systems, an OFDM modulation signal received by the antenna 41 is frequency-converted into a first intermediate-frequency signal by the first mixer 44 and is further frequency-converted into a second intermediate-frequency signal by the second mixer 46. Then, the second intermediate-frequency signal is converted into a digital signal by the A/D converter 48.

In a similar manner, also, in the other receiving system, an OFDM modulation signal received by the antenna 51 is frequency-converted into a first intermediate-frequency signal by the first mixer 54 and is further frequency-converted into a second intermediate-frequency signal by the second mixer 56, and the second intermediate-frequency signal is converted into a digital signal by the A/D converter 58.

Then, the digital signals output from the two A/D converters 48 and 58 are input to diversity combining means 65.

The diversity combining means 65 comprises cross-correlation detection means 65a for detecting a cross correlation between the digital signals output from the two A/D converters 48 and 58, phase-shifting means 65b for performing phase correction of a digital signal output from one of the A/D converters, phase-shifting means 65c for performing phase correction of a digital signal output from the other A/D converter, and addition means 65d for combining the two phase-corrected digital signals.

Then, based on the cross correlation between the two digital signals detected by the cross-correlation detection means 65a, the two digital signals are corrected so that these signals become in phase with each other.

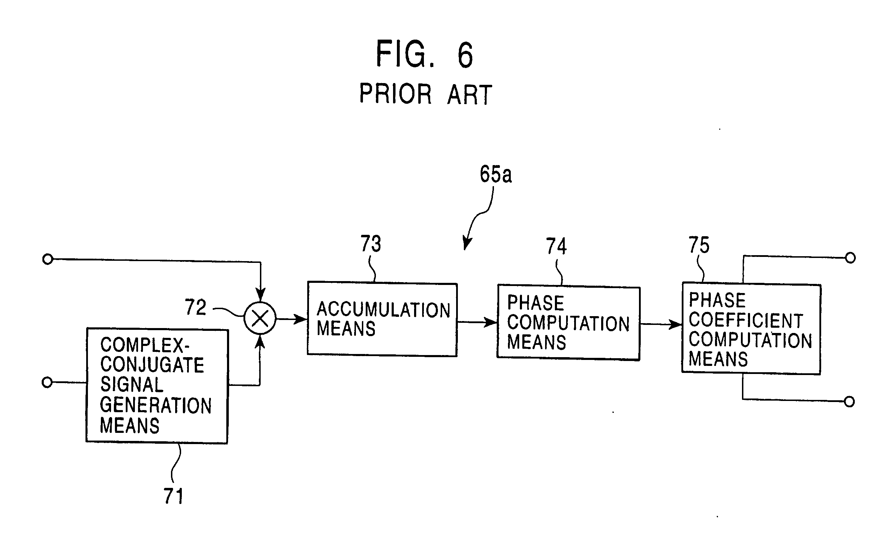

The cross-correlation detection means 65a, as shown in Fig. 6, comprises complex-conjugate signal generation means 71 for generating a complex-conjugate signal from one of the two digital signals whose phase is compared with the other signal, multiplication means 72 for performing a multiplication process on the complex-conjugate signal and the other digital signal, accumulation means 73 for accumulating the multiplication result for a predetermined time, phase computation means 74 for calculating the amount of phase which should be corrected from the accumulation result, and phase coefficient computation means 75 for computing two phase coefficients from the calculation result of the amount of phase.

Then, based on the computed phase coefficients, the amount of phase of the two phase-shifting means 65b and 65c is corrected.

The corresponding digital signals whose phases are corrected for by the two phase-shifting means 65b and 65c are combined by the addition means 65d, and the combined digital signal is OFDM-demodulated by OFDM demodulation means 66.

As described above, in the conventional OFDM receiving apparatus, a plurality of received OFDM modulation signals are converted into digital signals after the frequency of each of the signals is converted, after which the phase of the signals is corrected by digital processing and the signals are combined together by the diversity combining means. However, since the cross-correlation detection means and the phase-shifting means contain a complex correlator, and a large number of multipliers and dividers, even if these are constructed as ICs (integrated circuits), problems arise in that the circuit scale becomes enormous, and the power consumption becomes large.

Furthermore, there is another problem in that, since the receiving system from the antenna to the A/D converter is completely independent for each antenna, the scale of the high-frequency circuit which handles an analog high-frequency signal becomes large.

### SUMMARY OF THE INVENTION

Accordingly, an object of the present invention is to simplify a circuit scale by performing diversity combining with an analog circuit and further by sharing a part of a high-frequency circuit among all receiving systems.

To achieve the above-mentioned object, in one aspect, the present invention provides an OFDM receiving apparatus comprising: a plurality of first mixers for frequency-converting OFDM modulation signals received by a plurality of antennas, respectively, which are spaced from each other, into a first intermediate-frequency signal; local oscillation means for supplying a first local oscillation signal to each of the first mixers; an adder for combining the first intermediate-frequency signals; an A/D converter for converting the combined first intermediate-frequency signal into a digital signal; OFDM demodulation means for OFDM-demodulating the digital signal; and phase control means for performing phase setting of the first local oscillation signal supplied to each of the first mixers for the purpose of causing the power of the combined OFDM modulation signal to reach a predetermined level or higher.

Furthermore, the local oscillation means may comprise one first local oscillator for generating a first local oscillation signal, and a plurality of phase shifters, disposed between each of the first mixers and the first local oscillator, for controlling the phase of the first local oscillation signal and supplying the signal to each of the first mixers. Each of the phase shifters is controlled by the phase control means so that phase setting of the first local oscillation signal supplied to each of the first mixers is performed.

Furthermore, the local oscillation means may comprise a plurality of first local oscillators for supplying the first local oscillation signal to each of a first mixers, a plurality of PLL circuits for controlling each of the first local oscillators, one reference signal source for generating a reference signal, and a plurality of phase shifters, disposed between each of the PLL circuits and the reference signal source, for controlling the phase of the reference signal and supplying the signal to each of the PLL circuits. Each of the phase shifters is controlled by the phase control means so that phase setting of the first local oscillation signal supplied to each of the first mixers is performed.

Furthermore, the local oscillation means may comprise a plurality of first local oscillators for supplying a first local oscillation signal to each of the first mixers, a plurality of PLL circuits for controlling each of the first local oscillators, and a plurality of digital synthesizers, disposed so as to correspond to each of the PLL circuits, for generating a reference signal and for controlling the phase of the reference signal and supplying the signal to each of the PLL circuits. Each of the digital synthesizers is controlled by the phase-shift control means so that phase setting of the first local oscillation signal supplied to each of the first mixers is performed.

A second mixer for frequency-converting the combined first intermediate-frequency signal into a second intermediate-frequency signal, and a second local oscillator for supplying a second local oscillation signal to the second mixer may be provided between the adder and the A/D converter.

As has thus been described, in the present invention, there is provided phase control means for performing phase setting of the first local oscillation signal supplied to each of the first mixers for the purpose of frequency-converting each of the OFDM modulation signals received by a plurality of antennas spaced from each other into a first intermediate-frequency signal and combining the signals, and causing the power of the combined OFDM modulation signal to reach a predetermined level or higher. Therefore, it is possible to perform diversity combining by an analog circuit. Consequently, the configuration becomes simplified.

The local oscillation means may comprise one first local oscillator for generating a first local oscillation signal, and a plurality of phase shifters, disposed between each of the first mixers and the first local oscillator, for controlling the phase of the first local oscillation signal and supplying the signal to each of the first mixers. Each of the phase shifters is controlled by the phase control means so that phase setting of the first local oscillation signal supplied to each of the first mixers is performed. Therefore, the configuration of the local oscillation means also becomes simplified.

Furthermore, the local oscillation means may comprise a plurality of first local oscillators for supplying a first local oscillation signal to each of the first mixers, a plurality of PLL circuits for controlling each of the first local oscillators, one reference signal source for generating a reference signal, and a plurality of phase shifters, disposed between each of the PLL circuits and the reference signal source, for controlling the phase of the reference signal and supplying the signal to each of the PLL circuits. Each of the phase shifters is controlled by the phase control means so that phase setting of the first local oscillation signal supplied to each of the first mixers is performed. Therefore, since the phase shifter varies the phase of the reference signal which is at a single frequency, the characteristics of a wide band are not necessary. Furthermore, since the frequency of the reference signal is considerably lower than the frequency of the first local oscillation signal, loss of the first local oscillation signal due to the insertion of the phase shifter is eliminated.

Furthermore, the local oscillation means may comprise a plurality of PLL circuits for controlling the first local oscillators, respectively, and a plurality of digital synthesizers, disposed so as to correspond to each of the PLL circuits, for generating a reference signal, and for controlling the phase of the reference signal and supplying the signal to each of the PLL circuits. Each of the digital synthesizers is controlled by the phase-shift control means so that the phase setting of the first local oscillation signal supplied to each of the first mixers is performed. Therefore, phase setting in a digital manner becomes possible.

Furthermore, a second mixer for frequency-converting the combined first intermediate-frequency signal into a second intermediate-frequency signal, and a second local oscillator for supplying a second local oscillation signal to the second mixer are provided between the adder and the A/D converter. Therefore, since the second mixer portion and subsequent portions are configured as one system, the configuration of an OFDM receiving apparatus of a double conversion method is simplified.

### BRIEF DESCRIPTION OF THE DRAWINGS

Fig. 1 is a circuit diagram showing the configuration of a first embodiment of an OFDM receiving apparatus of the present invention;
Fig. 2 is a flowchart illustrating the operation of the OFDM receiving apparatus of the present invention;
Fig. 3 is a circuit diagram showing the configuration of a second embodiment of an OFDM receiving apparatus of the present invention;
Fig. 4 is a circuit diagram showing another configuration of the second embodiment of an OFDM receiving apparatus of the present invention;
Fig. 5 is a circuit diagram showing the configuration of a conventional OFDM receiving apparatus; and
Fig. 6 is a circuit diagram showing the configuration of cross-correlation detection means in the conventional OFDM receiving apparatus.

### DESCRIPTION OF THE PREFERRED EMBODIMENT

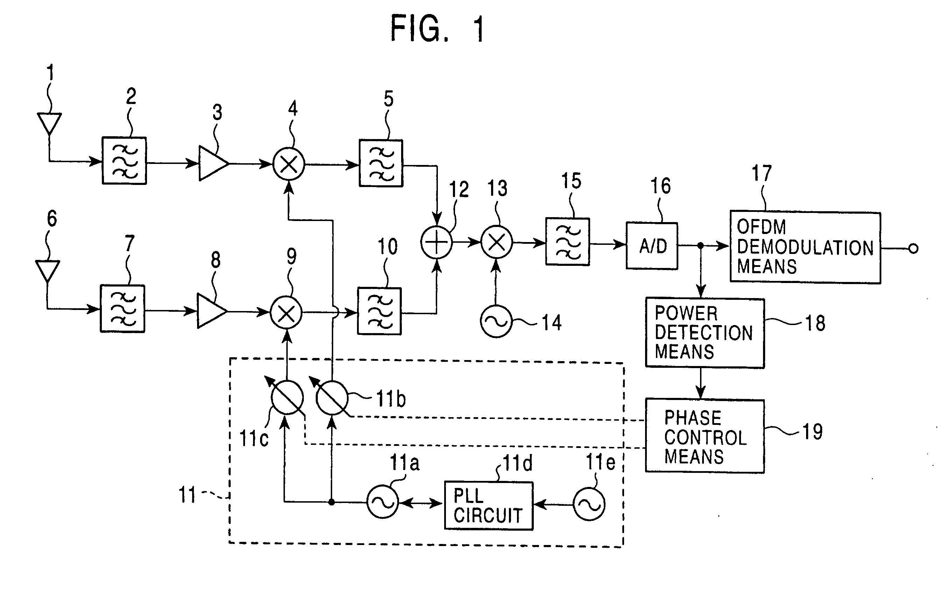

An OFDM receiving apparatus of the present invention will be described below with reference to the drawings. A description is given by assuming the number of a plurality of receiving systems as 2. Fig. 1 shows a first embodiment of the present invention. One of the receiving systems comprises an antenna 1, an RF band-pass filter 2, a low noise amplifier 3, a first mixer 4, and a first IF (intermediate frequency) band-pass filter 5. The other receiving system also comprises an antenna 6, an RF band-pass filter 7, a low noise amplifier 8, a first mixer 9, and a first IF band-pass filter 10. A first local oscillation signal is input from local oscillation means 11 to the two first mixers 4 and 9.

The local oscillation means 11 comprises a first local oscillator 11a for generating a first local oscillation signal, two phase shifters 11b and 11c for controlling the phase of the first local oscillation signal and individually supplying the signal to the two first mixers 4 and 9, a PLL circuit 11d for controlling the first local oscillator 11a and setting the frequency of the first local oscillation signal, and a reference signal source 11e for generating a reference signal and supplying the signal to the PLL circuit 11d.

Then, an OFDM modulation signal received by each of the antennas 1 and 6, which has passed through each of the RF band-pass filters 2 and 7, and which is amplified by each of the low noise amplifiers 3 and 8, is input to each of the first mixers 4 and 9. The OFDM modulation signal input to each of the first mixers 4 and 9 is mixed with the first local oscillation signal, and is frequency-converted into a first intermediate-frequency signal. The first intermediate-frequency signal output from one of the first mixers **4** and the first intermediate-frequency signal output from the other first mixer 9 are input via the first IF band-pass filters 5 and 10, respectively, to an adder 12, where the signals are diversity-combined.

The combined first intermediate-frequency signal is input to a second mixer 13, where the signal is mixed with a second oscillation signal supplied from a second local oscillator 14, and the resulting signal is frequency-converted into a second intermediate-frequency signal. The second intermediate-frequency signal passes through a second IF band-pass filter 15 and is input to an A/D converter 16, where the signal is converted into a digital signal. Then, the digital signal is demodulated by OFDM demodulation means 17. The OFDM demodulation means 17 has the same configuration as that of a conventional one.

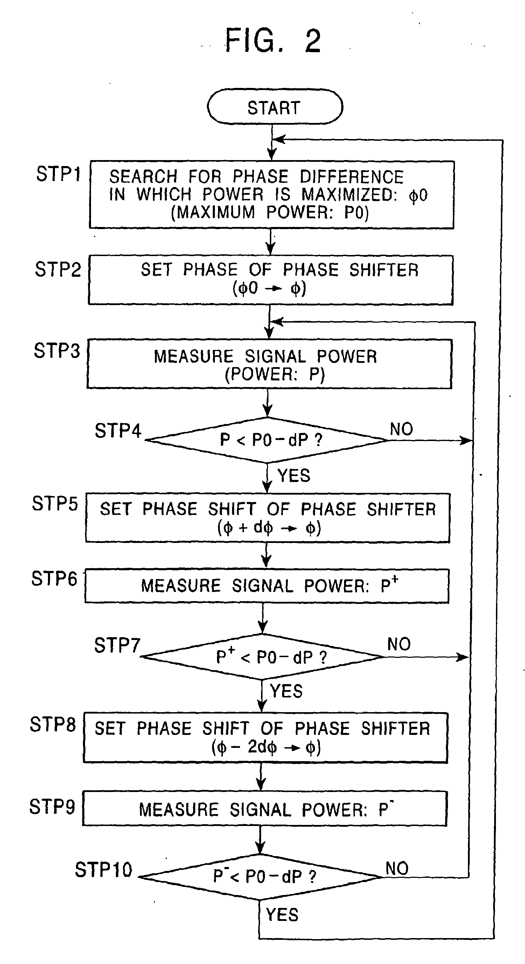

Furthermore, the digital signal is input to power detection means 18. The power detection means 18 detects power proportional to the magnitude of the second intermediate-frequency signal on the basis of the input digital signal, and the detected power is input to phase control means 19. The phase control means 19 controls the phase of the first local oscillation signal by the two phase shifters 11b and 11c in the local oscillation means 11. As a result of the phase control, the power which is detected is controlled to become a predetermined level or higher. In this phase control, a consideration is taken so that an influence of a level variation of a received signal associated with fading is not imposed. Next, the phase control is described with reference to the flowchart in Fig. 2.

The phase control means 19 has an internal microcomputer and memory (not shown) for performing a series of control operations. Initially, in step 1 (in Fig. 2, this is indicated as STP1, and the same applies hereinafter), each of the phase shifters 11b and 11c is controlled so that the phase difference between the OFDM modulation signals (the second intermediate-frequency signals) of two systems, output from the two mixers 4 and 9, vary from 0° to 360°, so that the phase difference (Φ) of the first local oscillation signals input to each of the first mixers 4 and 9 is varied, and the phase difference (Φ) of the first local oscillation signal in which power (P) of the second combined intermediate-frequency signal is maximized, and the maximum power (P0), are determined.

Next, in step 2, each of the phase shifters 11b and 11c is set so that the phase difference Φ becomes Φ0. In step 3, the power P at this time is measured. In step 4, a comparison is made to determine as to whether the measured power P is at a predetermined level or higher. The "predetermined level" herein is a level in which the power has decreased by a fixed power (dP) from the maximum power P0 and is indicated as (P0 - dP). Then, if P > (P0 - dP), the process returns to step 3, and if P < (P0 - dP), the process proceeds to step 5, where the phase difference Φ is updated to Φ + dΦ such that the phase difference Φ is increased by a fixed phase difference dΦ. Then, power P⁺ at this time is measured (step 6).

In step S7, a comparison is made again to determine whether or not the measured power (P⁺) has decreased by a predetermined level or more. Then, if P⁺ > (P0 - dP), the process returns to step 3, and if P⁺ < (P0 - dP), the process proceeds to step 8, where the phase difference Φ is updated to (Φ - 2dΦ). Then, power P⁻ at this time is measured (step 9).

In step 10, a comparison is made again to determine whether or not the measured power P⁻ has decreased by a predetermined level or more. Then, if P⁻ > (P0 - dP), the process returns to step 3, and if P⁻ < (P0 - dP), the process returns to step 1.

As a result of the above process flow, the power of the second intermediate-frequency signal is controlled to become a predetermined level which is decreased by a fixed power dP from the maximum power P0 or higher, and the first intermediate-frequency signals output from the two first mixers 4 and 9 become substantially in phase with each other and are diversity-combined by the adder 12.

In the above-described first embodiment, in order to perform diversity combining, the phase of the first local oscillation signal needs only be controlled, and the second mixer portion and subsequent portions can be made common. As a result, the configuration can be remarkably simplified.

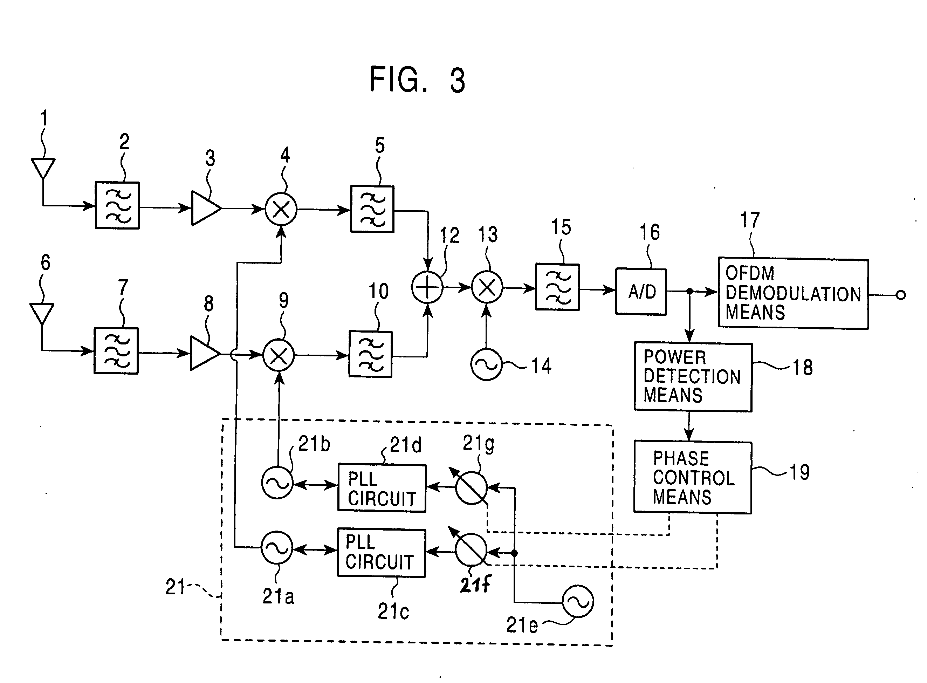

Fig. 3 shows a second embodiment of the present invention. In Fig. 3, differences from Fig. 1 are the configuration of the local oscillation means, and descriptions of the remaining configuration are omitted by giving the same reference numerals.

Local oscillation means 21 for supplying a first local oscillation signal to the two first mixers 4 and 5 comprises a first local oscillator 21a for supplying a first local oscillation signal to one of the first mixers 4, a second local oscillator 21b for supplying a first local oscillation signal to the other first mixer 9, a PLL circuit 21c for setting the oscillation frequency of one of the first local oscillators 21a, a PLL circuit 21d for setting the oscillation frequency of the other first local oscillator 21b, a reference signal source 21e for generating a reference signal, and phase shifters 21f and 21g for controlling the phase of the reference signal and supplying the signal to the PLL circuits 21c and 21d, respectively.

Then, the oscillation frequencies of the two PLL circuits 21c and 21d, set by the two PLL circuits 21c and 21d, become the same value.

The phase control means 19 directly performs phase setting of the two phase shifters 21f and 21g. This allows the phase relationship of the first local oscillation signals supplied to the two first mixers 4 and 9 to be determined. Therefore, the first local oscillation signal supplied to each of the first mixers 4 and 9 from the first local oscillator 21a and 21b is indirectly subjected to phase-setting. Furthermore, the phase relationship between the first intermediate-frequency signals output from the two first mixers 4 and 9 is determined. Then, instead of the phase shifters 11b and 11c of Fig. 1, the phase shifters 21f and 21g are controlled. However, since the control method thereof is the same as that described in Fig. 2, a description is omitted.

Since the phase shifters 21f and 21g in the second embodiment vary the phase of the reference signal which is at a single frequency, the characteristics of a wide band are not necessary. Furthermore, since the frequency of the reference signal is considerably lower than the frequency of the first local oscillation signal, loss of the first local oscillation signal due to the insertion of the phase shifters 21f and 21g is eliminated.

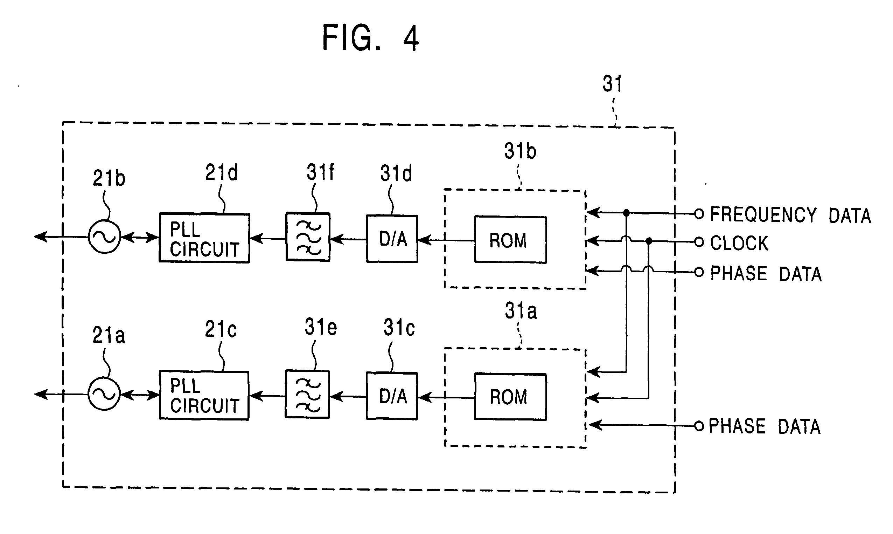

In the second embodiment, the reference signal source 21e is provided in the local oscillation means 21 so that a reference signal is generated, the phase of the reference signal is controlled by the phase shifters 21f and 21g, and the signal is supplied to each of the PLL circuits 21c and 21d. However, as shown in Fig. 4, a reference signal may be generated by a digital synthesizer, the phase thereof may be controlled, and the signal may be supplied to the PLL circuits 21c and 21d.

Fig. 4 shows the configuration of local oscillation means 31 in a case where a digital synthesizer is used. Digital synthesizers 31a and 31b each have a ROM. Each ROM has prestored therein sine-wave data for one period together with the amplitude and phase in a discrete manner. Then, a clock and frequency data are commonly input to each of the digital synthesizers 31a and 31b, and each ROM generates sine-wave data in which the frequency is the same in synchronization with the clock.

Furthermore, phase data is individually input to each of the digital synthesizers 31a and 31b. This phase data is input from the phase control means 19, the phase data being converted into a digital signal. This allows the phase of the sine-wave data to be determined. The sine-wave data output from each ROM is converted into an analog sine wave by each of the D/A converters 31c and 31d. This analog sine-wave signal is input, as a reference signal, to the PLL circuits 21c and 21d via band-pass filters 31e and 31f, respectively.

When a digital synthesizer is used in the manner described above, since the frequency and the phase of the reference signal can be set in a digital manner, setting becomes simplified.

## Claims

1. An OFDM receiving apparatus comprising:
a plurality of first mixers (4, 9) for frequency-converting OFDM modulation signals received by a plurality of antennas (1, 6), respectively, which are spaced from each other, into a first intermediate-frequency signal;
local oscillation means (11, 21, 31) for supplying a first local oscillation signal to each of said first mixers;
an adder (12) for combining said first intermediate-frequency signals;
an A/D converter (16) for converting said combined first intermediate-frequency signal into a digital signal;
OFDM demodulation means (17) for OFDM-demodulating said digital signal; and
phase control means (18, 19) for performing phase setting of said first local oscillation signal supplied to each of said first mixers for the purpose of causing the power of said combined OFDM modulation signal to reach a predetermined level or higher.

2. An OFDM receiving apparatus according to Claim 1, wherein said local oscillation means comprises one first local oscillator for generating said first local oscillation signal, and a plurality of phase shifters, disposed between each of said first mixers and said first local oscillator, for controlling the phase of said first local oscillation signal and supplying the signal to each of said first mixers, and each of said phase shifters is controlled by said phase control means so that said phase setting of said first local oscillation signal supplied to each of said first mixers is performed.

3. An OFDM receiving apparatus according to Claim 1, wherein said local oscillation means comprises a plurality of first local oscillators for supplying said first local oscillation signal to each of said first mixers, a plurality of PLL circuits for controlling each of said first local oscillators, one reference signal source for generating a reference signal, and a plurality of phase shifters, disposed between each of said PLL circuits and said reference signal source, for controlling the phase of said reference signal and supplying the signal to each of said PLL circuits, and each of said phase shifters is controlled by said phase control means so that said phase setting of said first local oscillation signal supplied to each of said first mixers is performed.

4. An OFDM receiving apparatus according to Claim 1, wherein said local oscillation means comprises a plurality of first local oscillators for supplying said first local oscillation signal to each of said first mixers, a plurality of PLL circuits for controlling each of said first local oscillators, and a plurality of digital synthesizers, disposed so as to correspond to each of said PLL circuits, for generating a reference signal, and for controlling the phase of said reference signal and supplying the signal to each of said PLL circuits, and each of said digital synthesizers is controlled by said phase-shift control means so that said phase setting of said first local oscillation signal supplied to each of said first mixers is performed.

5. An OFDM receiving apparatus according to Claim 1, wherein a second mixer for frequency-converting said combined first intermediate-frequency signal into a second intermediate-frequency signal, and a second local oscillator for supplying a second local oscillation signal to said second mixer are provided between said adder and said A/D converter.

## Patentansprüche

1. OFDM-empfangendes Gerät, aufweisend:
eine Mehrzahl von ersten Mischern (4, 9) zur Frequenzwandlung von OFDM-Modulationssignalen, die von einer Mehrzahl von entsprechenden voneinander beabstandeten Antennen (1,6) empfangen werden, in ein erstes Zwischenfrequenzsignal;
eine lokale Oszillationseinrichtung (11, 21, 31) zur Lieferung eines ersten lokalen Schwingungssignals an jeden der ersten Mischer;
einen Addierer (12) zur Kombinierung der ersten Zwischenfrequenzsignale;
einen A/D-Wandler (16) zum Umwandeln des kombinierten ersten Zwischenfrequenzsignals in ein digitales Signal;
eine OFDM-Demodulationseinrichtung (17) zur OFDM-Demodulation des digitalen Signals; und
Phasensteuereinrichtungen (18, 19) zur Ausführung der Phaseneinstellung des ersten lokalen Schwingungssignals, das an jeden der ersten Mischer geliefert wird, um zu bewirken, dass die Energie des kombinierten OFDM-Modulationssignals einen vorherbestimmten oder höheren Pegel erreicht.

2. OFDM-empfangendes Gerät nach Anspruch 1, wobei die lokale Oszillationseinrichtung einen ersten lokalen Oszillator zur Erzeugung des ersten lokalen Schwingungssignals und eine Mehrzahl von Phasenschiebern, die zwischen jedem der ersten Mischer und dem ersten lokalen Oszillator angeordnet sind, zur Steuerung der Phase des ersten lokalen Schwingungssignals und zur Lieferung des Signals an jeden der ersten Mischer aufweist, und wobei jeder der Phasenschieber von der Phasensteuereinrichtung so gesteuert wird, dass die Phaseneinstellung des an jeden der ersten Mischer gelieferten ersten lokalen Schwingungssignals ausgeführt wird.

3. OFDM-empfangendes Gerät nach Anspruch 1, wobei die lokale Oszillationseinrichtung eine Mehrzahl von ersten lokalen Oszillatoren zur Lieferung des ersten lokalen Schwingungssignals an jeden der ersten Mischer, eine Mehrzahl von PLL-Schaltungen zur Steuerung jedes der ersten lokalen Oszillatoren, eine Bezugssignalquelle zur Erzeugung eines Bezugssignals, und eine Mehrzahl von Phasenschiebern, die zwischen jeder der PLL-Schaltungen und der Bezugssignalquelle angeordnet sind, zur Steuerung der Phase des Bezugssignals und zur Lieferung des Signals an jede der PLL-Schaltungen aufweist, und wobei jeder der Phasenschieber von der Phasensteuereinrichtung so gesteuert wird, dass die Phaseneinstellung des an jeden der ersten Mischer gelieferten ersten lokalen Schwingungssignals ausgeführt wird.

4. OFDM-empfangendes Gerät nach Anspruch 1, wobei die lokale Oszillationseinrichtung eine Mehrzahl von ersten lokalen Oszillatoren zur Lieferung des ersten lokalen Schwingungssignals an jeden der ersten Mischer, eine Mehrzahl von PLL-Schaltungen zur Steuerung jedes der ersten lokalen Oszillatoren und eine Mehrzahl von digitalen Synthesizern, die so angeordnet sind, dass sie jeder der PLL-Schaltungen entsprechen, zur Erzeugung eines Bezugssignals und zur Steuerung der Phase des Bezugssignals und zur Lieferung des Signals an jede der PLL-Schaltungen aufweist, und wobei jeder der digitalen Synthesizer von der Phasenschiebungssteuereinrichtung so gesteuert wird, dass die Phaseneinstellung des an jeden der ersten Mischer gelieferten ersten lokalen Schwingungssignals ausgeführt wird.

5. OFDM-empfangendes Gerät nach Anspruch 1, wobei ein zweiter Mischer zur Frequenzwandlung des kombinierten ersten Zwischenfrequenzsignals in ein zweites Zwischenfrequenzsignal und ein zweiter lokaler Oszillator zur Lieferung eines zweiten lokalen Schwingungssignals an den zweiten Mischer zwischen dem Addierer und dem A/D-Wandler vorgesehen sind.

## Revendications

1. Appareil de réception MROF comprenant :
une pluralité de premiers mélangeurs (4, 9) pour convertir en fréquence des signaux de modulation MROF reçus respectivement par une pluralité d'antennes (1, 6) qui sont espacées les unes des autres, en un premier signal de fréquence intermédiaire ;
un moyen d'oscillation locale (11, 21, 31) pour fournir un premier signal d'oscillation locale à chacun desdits premiers mélangeurs ;
un additionneur (12) pour combiner lesdits premiers signaux de fréquence intermédiaire ;
un convertisseur A/N (16) pour convertir ledit premier signal de fréquence intermédiaire combiné en un signal numérique ;
un moyen de démodulation MROF (17) pour démoduler en MROF ledit signal numérique ; et
un moyen de réglage de phase (18, 19) pour effectuer un réglage de phase dudit premier signal d'oscillation locale fourni à chacun desdits premiers mélangeurs dans le but de faire atteindre à la puissance dudit signal de modulation MROF un niveau prédéterminé ou supérieur.

2. Appareil de réception MROF selon la revendication 1, dans lequel ledit moyen d'oscillation locale comprend un premier oscillateur local pour produire ledit premier signal d'oscillation locale, et une pluralité de déphaseurs, placés entre chacun desdits premiers mélangeurs et ledit premier oscillateur local, pour régler la phase dudit premier signal d'oscillation locale et fournir le signal à chacun desdits premiers mélangeurs, et chacun desdits déphaseurs est commandé par ledit moyen de réglage de phase pour le réglage de phase dudit premier signal d'oscillation locale fourni à chacun desdits premiers mélangeurs.

3. Appareil de réception MROF selon la revendication 1, dans lequel ledit moyen d'oscillation locale comprend une pluralité de premiers oscillateurs locaux pour fournir ledit premier signal d'oscillation locale à chacun desdits premiers mélangeurs, une pluralité de circuits PLL pour commander chacun desdits premiers oscillateurs locaux, une source de signal de référence pour produire un signal de référence, et une pluralité de déphaseurs, placés entre chacun desdits circuits PLL et ladite source de signal de référence, pour régler la phase dudit signal de référence et fournir le signal à chacun desdits circuits PLL, et chacun desdits déphaseurs est commandé par ledit moyen de réglage de phase pour le réglage de phase dudit premier signal d'oscillation locale fourni à chacun desdits premiers mélangeurs.

4. Appareil de réception MROF selon la revendication 1, dans lequel ledit moyen d'oscillation locale comprend une pluralité de premiers oscillateurs locaux pour fournir ledit premier signal d'oscillation locale à chacun desdits premiers mélangeurs, une pluralité de circuits PLL pour commander chacun desdits premiers oscillateurs locaux, et une pluralité de synthétiseurs numériques, disposés de façon à correspondre à chacun desdits circuits PLL, pour produire un signal de référence, et pour régler la phase dudit signal de référence et fournir le signal à chacun desdits circuits PLL, et chacun desdits synthétiseurs numériques est commandé par ledit moyen de réglage de déphasage pour le réglage de phase dudit premier signal d'oscillation locale fourni à chacun desdits premiers mélangeurs.

5. Appareil de réception MROF selon la revendication 1, dans lequel un deuxième mélangeur pour convertir en fréquence ledit premier signal de fréquence intermédiaire combiné en un deuxième signal de fréquence intermédiaire, et un deuxième oscillateur local pour fournir un deuxième signal d'oscillation locale audit deuxième mélangeur sont prévus entre ledit additionneur et ledit convertisseur A/N.
